Europäisches Patentamt

**European Patent Office**

**Office européen des brevets**

(19)

(11) Publication number: **0 002 597**
**A1**

(12)

# EUROPEAN PATENT APPLICATION

(21) Application number: **78300786.7**

(22) Date of filing: **11.12.78**

(51) Int. Cl.²: **C 02 C 5/02**
**C 01 C 1/02**

(30) Priority: **12.12.77 GB 5165877**

(43) Date of publication of application:
**27.06.79 Bulletin 79/13**

(84) Designated contracting states:
**BE CH DE FR GB IT LU NL SE**

(71) Applicant: **The Thames Water Authority**
**New River Head Rosebery Avenue**
**London EC1R 4TP(GB)**

(72) Inventor: **West, John Thomas**
**New River Head Rosebery Avenue**
**London EC1R 4TP(GB)**

(72) Inventor: **Hurley, Brian John Edward**
**New River Head Rosebery Avenue**
**London EC1R 4TP(GB)**

(72) Inventor: **Rachwal, Anthony John**
**New River Head Rosebery Avenue**
**London EC1R 4TP(GB)**

(72) Inventor: **Waller, Clifford Brian**
**New River Head Rosebery Avenue**
**London EC1R 4TP(GB)**

(74) Representative: **Johnson, Terence Leslie et al,**
**Edward Evans & Co. Chancery House 53-64 Chancery**
**Lane**
**London, WC2A 1SD(GB)**

(54) Method and apparatus for removing ammonia from sludge liquor.

(57) The invention relates to a method of treating sludge liquors to remove and recover therefrom in usable form ammonia, the method comprising removing $CO_2$ from the liquor to raise its pH initially, then raising the pH to a value of at least 9 (2), purifying the liquor (3, 4), heating it (15), stripping the ammonia from the liquor with air in one tower (9), passing the air in co-current relation with an acid in another tower to form a usable ammonia salt, and recycling (24) the air through the towers in a continuous cycle.

EP 0 002 597 A1

./...

FIG. 1.

0002597

"Removal of ammonia from sludge liquor"

TECHNICAL FIELD OF THE INVENTION

The invention relates to a method and apparatus of removing ammonia from sewages, sewage and industrial effluents, sludges and sewage sludge liquors and filtrates, hereinafter defined as "sludge liquor". The sludge liquor could be liquid sludge itself, raw sludge or digested sludge, the latter two of which liquors respectively contain little carbon dioxide $(CO_2)$, or have had the $CO_2$ stripped from them.

BACKGROUND ART

Sludge liquors from sewage are rich in ammonia. It has been estimated that, for the applicants' geographical area of the United Kingdom alone, the value of this ammonia would be in the region of £1m if it could be recovered and sold, for example for use in the preparation of fertiliser. Various attempts have been made to recover it mostly by open tower air stripping techniques which employ costly chemicals and plants which cannot be worked throughout the year because even in England they tend to freeze up in winter. In addition to the tendency to freeze-up, these open towers also have the disadvantage that $CO_2$ reacts with calcium ions at high pH causing boiler scale or scaling in the tower, which reduces their efficiency. Also, there is a further yet important disadvantage from the environmental point of view in that the stripped ammonia passes directly into the atmosphere from an open tower, so polluting the atmosphere.

DISCLOSURE OF THE INVENTION

It is accordingly among the objects of the invention to provide a method and apparatus for removing ammonia from an ammonia-containing sludge liquor.

- 1 -

According to one aspect of the invention there is provided a method of removing ammonia from an ammonia-containing sludge liquor (as herein defined), comprising the steps of:-

(i)    raising the pH of the sludge liquor to a value up to 9 by stripping $CO_2$ from the liquor;

(ii)   purifying the sludge liquor of increased pH;

(iii)  ensuring that the temperature of the said purified sludge liquor is in the range $5^o$ to $50^oC$;

(iv)   providing a gas which does not react with ammonia; and

(v)    contacting the said purified sludge liquor in said temperature range with said gas, whereby ammonia is removed from said liquor into the gas.

Using a method embodying the invention it is possible to obtain an effective release of ammonia from a sludge liquor, owing to the raising of the pH of the liquor. In fact virtually all the ammonia can be released from the sludge liquor at a pH of 12.0.

The gas contacting step may comprise passing air and the high pH liquor through a gas-liquid contact chamber. In this way, the air and the liquor are intimately mixed over as large a surface area as possible and this ensures release of the ammonia to the air.

In order to enhance mixing, the air and liquor preferably pass in counter-current flow through the contact chamber which may contain an inert packing.

Alternatively, also to enhance mixing, the contact chamber may comprise a fluidised bed in which the air fluidises an inert packing in the bed and in use the continuous movement assists transfer of the ammonia to the air from the liquor.

Preferably the method may include the further step of recovering ammonia from the air for example by contacting the air with an ammonia capture medium such as liquid acid, to form an ammonium salt, or a suitable solid absorbent or adsorbent. The salt can then be for example subject to further processing e.g. to be made into fertiliser. This enables this further step to be carried out following the air-high pH liquor contacting step and to provide for the recycling of the air.

The air-liquor contacting step and the ammonia recovery step may take place in a closed circuit in which the air is recycled from one said contact chamber to the other.

The air-containing ammonia and the acid may be contacted by passing them in co- or counter-current mode.

According to a second aspect of the invention there is provided apparatus for removing ammonia from an ammonia-containing sludge liquor (as herein defined), comprising:-

(i)    means for raising the pH of the sludge liquor to a value up to 9;

(ii)   said means of (i) including means for stripping $CO_2$ from the liquor;

(iii) means to purify the sludge liquor of increased pH;

(iv)  means to ensure that the temperature of the said purified sludge liquor is in the range $5^{\circ}C$ to $50^{\circ}C$;

(v)    a source of gas which does not react with ammonia; and

(vi)  means to contact said purified sludge liquor in said temperature range with said gas whereby ammonia is removed from said liquor into said gas.

The purifying means may clarify the liquor and also substantially remove the BOD, COD and phosphate content therefrom.

The contacting device may comprise a contact chamber in which the air and liquor pass in counter-flow relation through the chamber so that ammonia is removed from the liquor by the air, with which it becomes mixed.

It will be understood that the invention extends to liquor from which ammonia has been removed, and to ammonia, obtained using the method and apparatus hereinbefore defined.

Apparatus embodying the invention, and its method of operation, are hereinafter described, by way of example, with reference to the accompanying drawings, in which:-

BRIEF DESCRIPTION OF THE DRAWINGS

Figure 1 shows a schematic layout of apparatus in which the method can be performed; and

Figure 2 shows a graph of typical results from four complete operational cycles in the apparatus of Figure 1.

BEST MODES FOR CARRYING OUT THE INVENTION

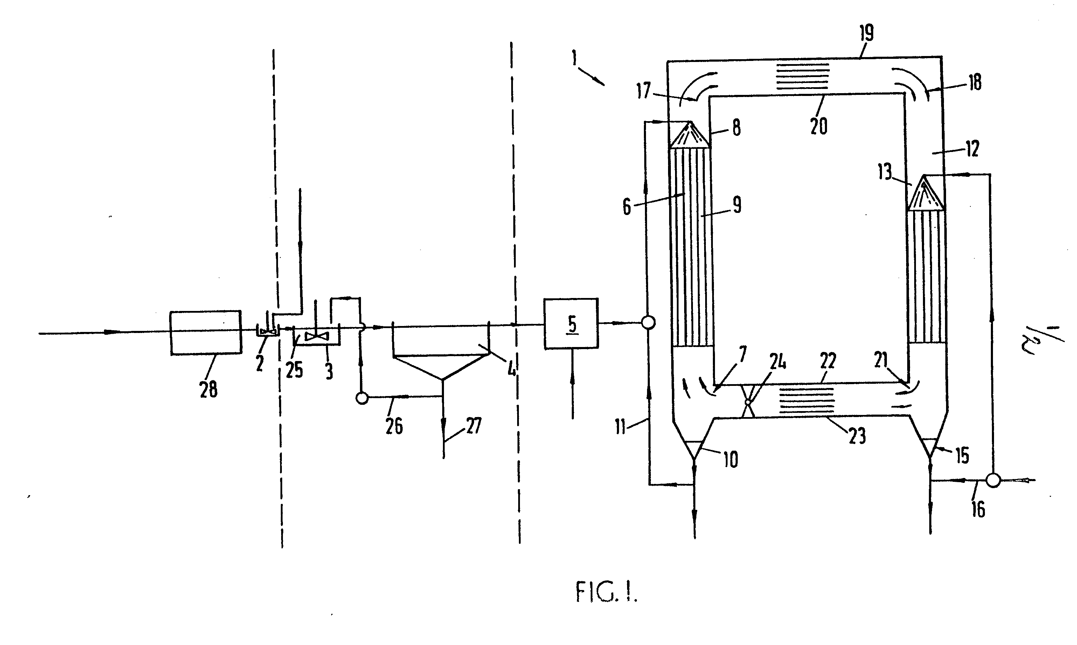

Referring to the drawings, the apparatus 1 (Figure 1) in which a method of removing ammonia from sludge liquor (as herein defined) can be carried out, comprises a flash mixer or station 2 where lime is added to raise the pH of the sludge liquor to a value in the range 9 to 12.5, a flocculator 3 and clarifier tank 4 for clarifying the liquor, a heat exchanger 5 through which the clarified liquor passes for ensuring that the temperature of that liquor is in the range 5°C to 50°C and a gas/liquid contact chamber comprising a contact tower 6 in which the clarified high pH sludge liquor, and air, are contacted so that the ammonia is removed from the liquor into the air. The temperature is dependent on cost/efficiency criteria and is commonly 30°C to 33°C. The air enters the tower 6 at the bottom through an inlet 7, and the liquor enters the tower at the top through a distribution device 8. The air and liquor thus pass in counter-current flow through the tower 6, which is filled with suitable contact elements 9 such as spheres, contact plates, or granules, e.g. of plastics, all of which provide a large surface area for intimate contact of the air and liquor so that removal of the ammonia to the air is enhanced. The liquor stripped of ammonia exit at the bottom 10 of the tower 6. Some at least can be recycled to the liquor distribution device 8 along line 11. The air laden with ammonia is then passed to a further contact chamber or tower 12 in which the ammonia is recovered from the air by contacting it with liquid acid such as nitric acid. The tower 12 is similar to the tower 6 in construction, though the air and acid pass through it in co-current relation. The acid is distributed as a spray onto the contact elements by a distribution device 13 fed along line 14 from a source (not shown).

The ammonia combines with the acid to form an ammonium salt solution, e.g. ammonium nitrate where the acid used is nitric acid, which is removed at an exit 16 for subsequent treatment. Some or all of the solution may be recycled to the acid distributing device 13 along lines 16 and 14. An exit 17 for air from the tower 6 and an inlet 18 for air to the tower 12 are connected by a passage 19 containing a mist eliminator 20. Likewise, the inlet 7 for air to tower 6 and the exit 21 for air from tower 12 are connected by a passage 22 containing a mist eliminator 23. The passage 22 extending between the towers 6 and 12 also has a low pressure fan 24 for circulating the air through those towers. It will thus be understood that the two towers 6 and 12 and the passages 19 and 22 form a closed circuit around which the air is, in use, continuously recycled through each tower. This recycling is advantageous because it avoids polluting the ambient atmosphere, avoids freezing of the towers so that, particularly if they are suitably lagged and/or have a heater, for example in tower 12, the method can be used throughout the year, and also strips the air of $CO_2$ after several passes so that this does not interfere with the method. It will be appreciated that the stripping action in tower 6 is an endothermic (cooling) reaction while the reaction in the tower 12 is an exothermic (heating) one which means that on balance the towers are maintained at a suitable high temperature by the circulating air heated in the tower 12.

Where the sludge liquor is a sewage sludge and passes from a plant, the heat exchanger 5 is heated by waste heat from the digesters of that sewage plant, and heats the liquor when it passes through it in order to ensure the 30°C temperature of the clarified liquor so that stripping of ammonia is enhanced.

Although lime has been described as the alkali for raising the pH, it will be understood that any other suitable pH raising agent could be used. Also, a sludge conditioner and/or a polyelectrolyte could be added to the liquor to aid clarification in the flocculator 3 (which has a paddle 25 to enhance mixing) and the clarifier tank 4. Some of the waste lime sludge from the tank can be recycled to the flocculator along line 26 where a sewage sludge is being treated. The waste lime sludge from the clarifier 4 is enriched with phosphates, can be disposed of via line 27 by spreading on the land or could be treated further, for example by being classified, in order to enhance the phosphate content.

If the ammonia-containing liquor contains $CO_2$ this is removed in an initial treatment step indicated schematically at 28 such as passing the liquor through a $CO_2$ stripping module comprising a tank in which air from blowers (not shown) is diffused through the liquor from diffusers. The $CO_2$ is stripped from the liquid by the air. It will of course be appreciated that the $CO_2$ could be removed in any other way. For example, removal could be effected by absorption, counter-current stripping, stripping using a surface aeration system et

Valves S may be incorporated in the various lines as illustrated, and the directions of flow of the various liquors, sludges and air are shown by the arrows on the lines connecting the various parts of the apparatus.

The invention is hereinafter described in the following specific Example.

EXAMPLE

Digested sludge supernatant liquor was treated on a pilot scale using a flow scheme of the type shown by Figure 1 at flow rates from 2 to 30 litres per minute. After passing through a $CO_2$ stripping station lime slurry was added to the liquor to raise the pH to 12.0 and after flocculation and settlement the liquor was stripped of ammonia in a 300mm diameter packed tower. Sulphuric acid was used in tower 12 to absorb the ammonia gas from the recycled air stream. The overall performance of the plant is summarised in Table 1 where it can be seen that up to 95% ammonia removal, 100% soluble phosphate removal and 80% SS, COD and BOD removal could be achieved by the process. Full recovery of the stripped ammonia was obtained as ammonium sulphate solution.

Various air/liquid ratios in tower 6 have been investigated

- 7 -

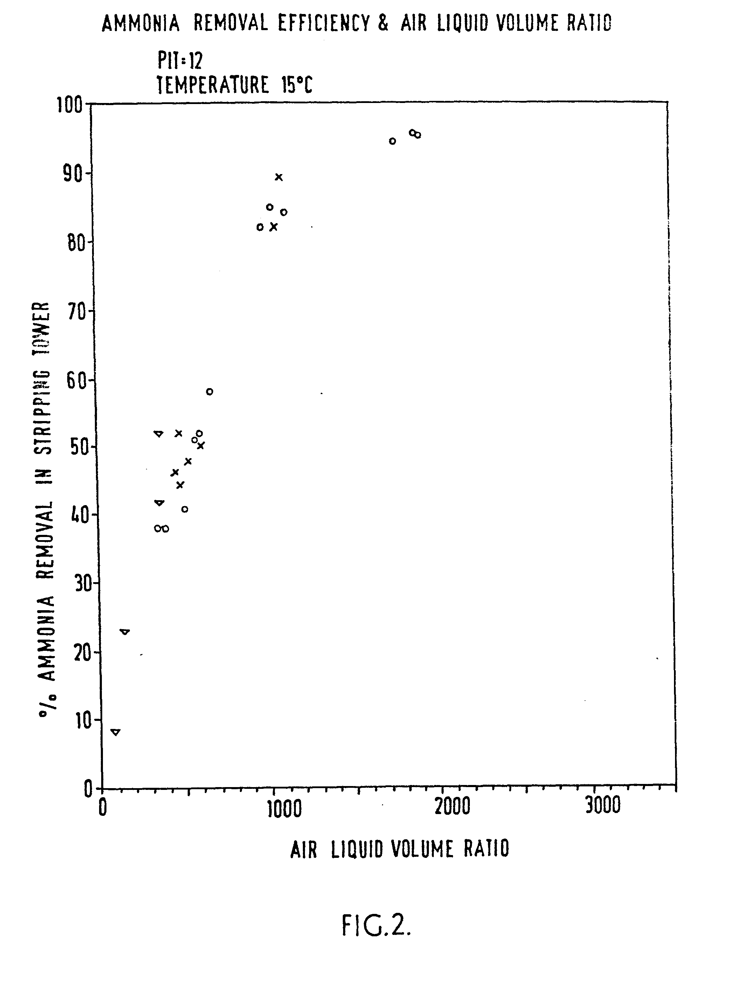

to optimise ammonia removal efficiency and typical results for pH 12 are shown by Table 2 and also graphically in Figure 2.

Based on the above experimental results we are able to achieve 95% ammonia removal and 100% recovery of this. Removal of 80% or greater of the suspended solids, COD, BOD and phosphate from digested sludge supernatant liquor has also been achieved.

TABLE 1

TYPICAL OVERALL PERFORMANCE ACHIEVED BY PROCESS

| PARAMETER | FEED LIQUOR | SETTLED LIQUOR (After Lime Treatment) | TREATED LIQUOR (After $NH_3$ stripping) |
|---|---|---|---|
| $NH_3$ as N (mg/l) | 750 | 700 | 35 |
| Soluble $PO_4$ as P (mg/l) | 40 | 0 | 0 |
| Suspended Solids (SS) (mg/l) | 410 | 80 | 70 |
| COD (mg/l) | 1320 | 260 | 230 |
| BOD (mg/l) | 290 | 55 | 45 |
| %$NH_3$ Removal | – | 7 | 95 |
| %P Removal | – | 100 | 100 |
| %SS Removal | – | 80 | 83 |
| % COD Removal | – | 80 | 83 |
| % BOD Removal | – | 81 | 84 |

TABLE 2

TYPICAL AMMONIA REMOVAL EFFICIENCY AT pH 12 AND 15°C

| Liquid Flow 1/min | Air Velocity m/s | Air Flow Rate $m^3$/hr. | Air:Liquid Ratio Volume/volume | $NH_3$ as N. mg/l | | % Removal of $NH_3$ |
|---|---|---|---|---|---|---|
| | | | | Un-treated Liquor | Treated Liquor | |
| 4.0 | 1.8 | 450 | 1875 | 702 | 32.6 | 95.4 |
| 3.9 | 1.7 | 444 | 1897 | 714 | 35.7 | 95.0 |
| 4.1 | 1.7 | 432 | 1756 | 727 | 40.8 | 94.4 |
| 7.0 | 1.6 | 408 | 971 | 727 | 133 | 81.7 |
| 6.8 | 1.7 | 420 | 1029 | 740 | 112 | 84.9 |
| 6.5 | 1.7 | 432 | 1108 | 714 | 115 | 83.9 |
| 10.0 | 1.4 | 348 | 580 | 740 | 362 | 51.1 |
| 10.1 | 1.4 | 360 | 594 | 753 | 367 | 51.9 |
| 9.8 | 1.6 | 396 | 673 | 740 | 311 | 58.0 |
| 13.0 | 1.6 | 396 | 508 | 765 | 454 | 40.7 |
| 15.0 | 1.4 | 348 | 387 | 740 | 459 | 38.0 |
| 14.0 | 1.2 | 300 | 357 | 765 | 474 | 38.0 |

- 10 -

CLAIMS

1.    A method of removing ammonia from an ammonia-containing sludge liquor (as herein defined), comprising the steps of raising the pH of the sludge liquor, purifying the sludge liquor of increased pH, providing a gas which does not react with ammonia, and contacting the purified sludge liquor with the gas so that the ammonia is removed from the sludge liquor into the gas, characterised by raising the pH of the sludge liquor to a value up to 9 by stripping $CO_2$ from the liquor, and by ensuring that the temperature of the purified liquor is in the range $5^{o}C$ to $50^{o}C$ prior to the step of contacting the liquor with the gas.

2.    A method according to claim 1, characterised on that the step of raising the pH of the sludge liquor comprises raising the pH to a value in the range 10.5 to 12.0 at a temperature in the range $15^{o}C$ to $35^{o}C$.

3.    A method according to claim 2, characterised in that the pH is raised by adding an alkali, preferably lime.

4.    A method according to any preceding claim, characterised in that the gas, preferably air, and the purified and heated sludge liquor of high pH are passed through a gas-liquid contact tower, preferably in counter-current flow.

5.    A method according to any preceding claim, characterised by a further process step of recovering ammonia from the gas by contacting the gas/ammonia mixture  with an ammonia capture medium.

6.    A method according to claim 5, characterised in that the ammonium capture medium is a  liquid acid, suitably nitric acid, and in that the acid and gas/ammonia mixture are passed through a further contact tower for removing the ammonia from the gas.

7.    A method according to claim 6, characterised in that the two contact towers are operatively connected so that they form a closed circuit for circulation of air.

8.    Apparatus for removing ammonia from an ammonia-containing sludge liquor (as herein defined) comprising means for raising the pH of the liquor to a value up to 9, means to clarify the liquor and means to remove ammonia from the liquor, characterised in that the pH is raised  in a device (28) for removing $CO_2$ from the liquor, and in that there is means (5) to raise the temperature of the liquor so that the temperature is in range $5^oC$ to $50^oC$.

9.    Apparatus according to claim 8, characterised by a gas-liquid contact tower (6) for removing ammonia from the liquor into a gas.

10. Apparatus according to claim 9, characterised by a further contact tower (12) forming a closed circuit with the tower (6) and in which tower (12) ammonia is contacted with a capture medium for removing it from the gas, preferably air.

FIG.I.

0002597

2/2

AMMONIA REMOVAL EFFICIENCY & AIR LIQUID VOLUME RATIO

PII=12
TEMPERATURE 15°C

FIG.2.

## EUROPEAN SEARCH REPORT

European Patent Office

Application number

EP 78 30 0786

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| X | FR - A - 2 260 532 (CH2MHILL) <br> * Page 3, line 18 - page 9, line 11; figure 1 * <br><br> -- | 1-10 | C 02 C 5/02 <br> C 01 C 1/02 |
| P | US - A - 4 076 515 (M.D. RICKARD) <br> * Column 4, line 30 - column 6, line 64; figures 1,2 * <br><br> -- | 1-3,5, 8 | |
| A | US - A - 3 754 376 (R.D. KENT) | | TECHNICAL FIELDS SEARCHED (Int.Cl.²) |
| A | DE - A - 2 530 537 (H. HOELTER) | | C 02 C 5/02 |
| A | US - A - 3 824 185 (D.H. CALDWELL et al.) <br><br> ---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 15-03-1979 | TEPLY |